# EUROPEAN PATENT APPLICATION

(11) **EP 4 531 168 A1**
(43) Date of publication of application: **02.04.2025**
(21) Application number: 23811146.2
(22) Date of filing: 25.05.2023
(51) Int. Cl.: H01M 10/613, H01M 10/6557, H01M 10/6567

(54) **THERMAL MANAGEMENT COMPONENT, BATTERY, AND ELECTRICAL DEVICE**

(30) Priority: 26.05.2022 CN 202221288027 U
(71) Applicant: Contemporary Amperex Technology (Hong Kong) Limited, Central, Central And Western District (HK)
(72) Inventor: HOU, Yuepan, Ningde, Fujian 352100 (CN)
(74) Representative: Gong, Jinping
(86) International application number: PCT/CN2023/096371
(87) International publication number: WO 2023/227076

(57) **Abstract**

This application discloses a thermal management component, a battery, and an electric apparatus. The thermal management component includes a housing and a support member. The housing is provided with an accommodating space inside, and the housing includes a first wall and a second wall respectively located on two sides of the accommodating space. The support member is disposed in the accommodating space and supports between the first wall and the second wall, and the support member is configured to be deformable when subjected to extrusion by the first wall. When a battery cell of the battery swells during the charge-discharge cycle, the first wall deforms along with deformation of the support member under the extrusion of the battery cell, squeezing out space for swelling of the battery cell, reducing an acting force between the battery cell and the thermal management component, and reducing the extent of reduction in a heat exchange area between the battery cell and the thermal management component, thereby improving the cycling performance of the battery cell.

## Description

### CROSS-REFERENCE TO RELATED APPLICATIONS

This application claims priority to Chinese Patent Application No. 202221288027.1, filed on May 26, 2022 and entitled "THERMAL MANAGEMENT COMPONENT, BATTERY, AND ELECTRIC APPARATUS", which is incorporated herein by reference in its entirety.

### TECHNICAL FIELD

This application relates to the field of battery technologies, and in particular, to a thermal management component, a battery, and an electric apparatus.

### BACKGROUND

Batteries are widely used in electronic devices such as mobile phones, notebook computers, electric bicycles, electric vehicles, electric aircrafts, electric ships, electric toy cars, electric toy ships, electric toy aircrafts, and electric tools.

In the development of battery technologies, how cycling performance of batteries is improved is an important research direction in battery technologies.

### SUMMARY

This application provides a thermal management component, a battery, and an electric apparatus, so as to improve cycling performance of batteries.

According to a first aspect, this application provides a thermal management component including a housing and a support member, where the housing is provided with an accommodating space inside, and the housing includes a first wall and a second wall respectively located on two sides of the accommodating space. The support member is disposed in the accommodating space and supports between the first wall and the second wall, and the support member is configured to be deformable when subjected to extrusion by the first wall.

The support member can support the first wall and the second wall to reduce the risk of collapse of the first wall or second wall. The support member is deformable when the first wall is subjected to extrusion, so that when a battery cell swells during the charge-discharge cycle, the first wall deforms along with deformation of the support member under the extrusion of the battery cell, squeezing out space for swelling of the battery cell, reducing an acting force between the battery cell and the thermal management component, and reducing the extent of reduction in a heat exchange area between the battery cell and the thermal management component, thereby improving the cycling performance of the battery cell.

In some embodiments, the first wall and the second wall are disposed opposite each other in a first direction; and the support member includes an inclined portion, where at least part of the inclined portion is inclined relative to the first direction.

When the thermal management component is subjected to an extrusion force from the battery cell in the first direction, the inclined portion can deform, and size of the deformed inclined portion in the first direction is compressed, thereby reducing the acting force between the battery cell and the thermal management component, ensuring that the heat exchange area between the battery cell and the thermal management component satisfies the requirements, and improving the cycling performance of the battery cell.

In some embodiments, the inclined portion is provided in plurality, and the plurality of inclined portions are disposed along a second direction, the second direction being perpendicular to the first direction.

Provision of the plurality of inclined portions can increase a supporting force on the first wall and the second wall, reducing the risk of damage to the thermal management component when subjected to large concentrated stress.

In some embodiments, two adjacent inclined portions are inclined in opposite directions, which can enhance the resilience of the support member after deformation, increase a contact area between the housing and the battery cell, and improve the thermal management capability of the thermal management component for the battery cell.

In some embodiments, flow channels are formed between adjacent inclined portions in the second direction.

The plurality of inclined portions can divide the accommodating space into a plurality of flow channels. In this way, when a heat exchange medium enters the accommodating space, the heat exchange medium can be divided into the plurality of flow channels, so that the thermal management component, when coming into contact with the battery cell, can regulate the temperatures of various parts of the battery cell in a uniform manner.

In some embodiments, the support member includes a plurality of arched structures arranged along the second direction, and each arched structure includes two adjacent inclined portions.

The arched structure has good elasticity, enhancing the resilience of the support member after deformation, which in turn increases the contact area between the housing and the battery cell, and improves the thermal management capability of the thermal management component for the battery cell.

In some embodiments, an end of the arched structure close to the second wall in the first direction abuts against the second wall and is connected to the second wall.

The arched structure being connected to the second wall can enhance the connection strength between the arched structure and the housing, reduce the risk of the support member shaking in the accommodating space, and improve the stability of the support member.

In some embodiments, the support member further includes connecting portions, and each connecting portion connects two adjacent inclined portions and abuts against the first wall.

The connecting portion connects two inclined portions together, which can enhance the structural strength of the support member, and the plurality of inclined portions form a whole, enhancing the resilience after deformation in the first direction and improving the thermal management capability of the thermal management component for the battery cell. The connecting portion can increase the distance between two inclined portions to increase a current flow area of the flow channel formed by the connecting portion and the two inclined portions.

In some embodiments, the support member includes a plurality of arched structures arranged along the second direction, and each arched structure includes two adjacent inclined portions; and adjacent arched structures are connected via the connecting portion.

Adjacent arched structures are connected via the connecting portion, which can enhance the structural strength of the support member, and the plurality of arched structures form a whole, enhancing the resilience after deformation in the first direction and improving the thermal management capability of the thermal management component for the battery cell. The connecting portion can increase the distance between two arched structures to increase a current flow area of the flow channel formed by the connecting portion and the two arched structures.

In some embodiments, the connecting portion is welded to the first wall, and the arched structure is welded to the second wall.

The connecting portion and the first wall, as well as the arched structure and the second wall, are connected by welding, which can enhance the fastness of the connection between the support member and the housing, increase the supporting force of the support member on the first wall and the second wall, and reduce the risk of damage to the thermal management component when subjected to large concentrated stress. In addition, the support member is connected to both the first wall and the second wall, with the first wall covering an opening of the arched structure, so that the arched structure and the first wall enclose a flow channel. The second wall covers the connecting portion and a side of two adjacent inclined portions facing away from the opening of the arched structure, so that the connecting portion, the back sides of the two adjacent arched structures, and the second wall also enclose a flow channel. Therefore, the support member and the first wall, as well as the support member and the second wall, enclose a plurality of independent flow channels. When a heat exchange medium enters the accommodating space, the heat exchange medium can be divided into the plurality of flow channels, so that the thermal management component, when coming into contact with the battery cell, can regulate the temperatures of various parts of the battery cell in a uniform manner.

In some embodiments, the support member is made of an elastic material.

The support member is made of an elastic material, where the elastic material is prone to deformation and has good resilience after deformation. Therefore, when the thermal management component is subjected to an extrusion force in the first direction, the support member is more likely to deform, which not only significantly reduces the acting force between the battery cell and the thermal management component, improving the cycling performance of the battery cell, but also increases a contact area between the thermal management component and the battery cell due to good resilience, improving the thermal management capability of the thermal management component for the battery cell.

In some embodiments, the support member is a porous structure. The support member is a porous structure, and the porous structure is prone to deformation due to the existence of many pores. Therefore, when the thermal management component is subjected to an extrusion force in the first direction, the support member is more likely to deform, which can significantly reduce the acting force between the battery cell and the thermal management component, improving the cycling performance of the battery cell.

In some embodiments, the housing is provided with a liquid inlet and a liquid outlet that communicate with the accommodating space. A heat exchange medium enters through the liquid inlet, flows through the accommodating space, and exits through the liquid outlet.

In some embodiments, the accommodating space includes a first confluence region and a second confluence region, where the liquid inlet communicates with the first confluence region, and the liquid outlet communicates with the second confluence region; and the support member, the first wall, and the second wall enclose and form a plurality of flow channels, where the plurality of flow channels are configured to implement communication between the first confluence region and the second confluence region.

Provision of the first confluence region and the second confluence region allows the plurality of flow channels to implement communication between the liquid inlet and the liquid outlet by just implementing communication between the first confluence region and the second confluence region. Therefore, provision of one liquid inlet and one liquid outlet can implement communication between the plurality of independent flow channels, allowing the plurality of flow channels in the support member to all have the heat exchange medium flowing through.

In some embodiments, the first confluence region and the second confluence region are located on two sides of the support member in a third direction.

The first confluence region and the second confluence region are disposed on two sides of the support member in the third direction, so that the heat exchange medium flows from the first confluence region through the plurality of flow channels along the third direction to the second confluence region. The heat exchange medium flows through the entire support member substantially along the third direction to exchange heat with the battery cell. The flow path of the heat exchange medium is relatively straight, resulting in better heat exchange effect.

In some embodiments, the support member includes a body portion and a partition portion protruding from an end of the body portion along a third direction; the accommodating space further includes a third confluence region, the third confluence region being located on a side of the body portion facing away from the partition portion, the first confluence region and the second confluence region are located on a same side of the body portion facing the partition portion, and the partition portion is configured to separate the first confluence region from the second confluence region; and the plurality of flow channels include a first flow channel and a second flow channel, where the first flow channel is configured to implement communication between the first confluence region and the third confluence region, and the second flow channel is configured to implement communication between the second confluence region and the third confluence region.

In the embodiments of this application, the liquid inlet and the liquid outlet are located on the same side of the body portion facing the partition portion. The liquid inlet and the liquid outlet are close to each other, facilitating layout of pipes.

In some embodiments, the housing includes a first housing body and a second housing body, and the first housing body and the second housing body are connected to enclose the accommodating space; and the first housing body includes the first wall, and the second housing body includes the second wall.

In some embodiments, the first housing body is provided with a first recess on a side facing the second housing body, and the second housing body is provided with a second recess on a side facing the first housing body, the accommodating space including the first recess and the second recess; and a bottom wall of the first recess is the first wall, and a bottom wall of the second recess is the second wall.

The first housing body and the second housing body are both recessed outward, which allows for larger volume of the accommodating space to accommodate more heat exchange medium, enhancing the cooling effect on the battery cell.

According to a second aspect, this application provides a battery including a battery cell and the foregoing thermal management component, where the thermal management component is configured to exchange heat with the battery cell.

In some embodiments, the battery cell is provided in plurality, and at least part of the thermal management component is located between adjacent battery cells. The thermal management component can exchange heat with battery cells on both sides simultaneously, improving the heat exchange efficiency.

According to a third aspect, this application provides an electric apparatus including the foregoing battery, where the battery is configured to supply electrical energy.

### BRIEF DESCRIPTION OF DRAWINGS

To describe the technical solutions in the embodiments of this application more clearly, the following briefly describes the accompanying drawings required for describing the embodiments of this application. Apparently, the accompanying drawings in the following description show merely some embodiments of this application, and persons of ordinary skill in the art may still derive other drawings from the accompanying drawings without creative efforts.
FIG. 1 is a schematic structural diagram of a vehicle according to some embodiments of this application;
FIG. 2 is a schematic exploded view of a battery according to some embodiments of this application;
FIG. 3 is a schematic structural diagram of a battery according to some embodiments of this application;
FIG. 4 is a schematic structural diagram of a thermal management component according to some embodiments of this application;
FIG. 5 is a schematic cross-sectional view of the thermal management component shown in FIG. 4;
FIG. 6 is a schematic cross-sectional view of a support member in the thermal management component shown in FIG. 5;
FIG. 7 is a schematic partial structural diagram of a thermal management component according to some other embodiments of this application;
FIG. 8 is a schematic partial structural diagram of a thermal management component according to still some other embodiments of this application;
FIG. 9 is an enlarged view of position A in FIG. 8;
FIG. 10 is a schematic partial structural diagram of a thermal management component according to yet some other embodiments of this application;
FIG. 11 is an enlarged view of position B in FIG. 10;
FIG. 12 is a schematic diagram of internal flow paths of a thermal management component according to some embodiments of this application; and
FIG. 13 is a schematic diagram of internal flow paths of a thermal management component according to some other embodiments of this application.

Reference signs in specific embodiments are described as follows:
1. vehicle; 2. battery; 3. controller; 4. motor; 5. box; 6. battery module; 7. battery cell; 8. thermal management component; 81. housing; 811. first wall; 812. second wall; 813. liquid inlet; 814. liquid outlet; 815. first confluence region; 816. second confluence region; 817. third confluence region; 818. first housing body; 8181. first recess; 819. second housing body; 8191. second recess; 82. support member; 821. inclined portion; 822. arched structure; 823. connecting portion; 824. body portion; 825. partition portion; 83. flow channel; 831. first flow channel; 832. second flow channel;
X. first direction; Y. second direction; and Z. third direction.

### DESCRIPTION OF EMBODIMENTS

To make the objectives, technical solutions, and advantages of the embodiments of this application clearer, the following clearly and completely describes the technical solutions in the embodiments of this application with reference to the accompanying drawings in the embodiments of this application. Apparently, the described embodiments are some but not all embodiments of this application. All other embodiments obtained by persons of ordinary skill in the art based on some embodiments of this application without creative efforts shall fall within the protection scope of this application.

Unless otherwise defined, all technical and scientific terms used in this application shall have the same meanings as commonly understood by those skilled in the art to which this application relates. The terms used in the specification of this application are intended to merely describe the specific embodiments rather than to limit this application. The terms "include", "comprise", and any variations thereof in the specification and claims of this application as well as the foregoing description of drawings are intended to cover non-exclusive inclusions. In the specification, claims, or accompanying drawings of this application, the terms "first", "second", and the like are intended to distinguish between different objects rather than to indicate a particular order or relative importance.

Reference to "embodiment" in this application means that specific features, structures, or characteristics described with reference to the embodiment may be included in at least one embodiment of this application. The word "embodiment" appearing in various places in the specification does not necessarily refer to the same embodiment or an independent or alternative embodiment that is exclusive of other embodiments.

In the description of this application, it should be noted that unless otherwise specified and defined explicitly, the terms "mounting", "connection", "join", and "attachment" should be understood in their general senses. For example, they may refer to a fixed connection, a detachable connection, or an integral connection, and may refer to a direct connection, an indirect connection via an intermediate medium, or an internal communication between two elements. Persons of ordinary skills in the art can understand specific meanings of these terms in this application as appropriate to specific situations.

The term "and/or" in this application is only an associative relationship for describing associated objects, indicating that three relationships may be present. For example, A and/or B may indicate three cases: presence of only A; presence of both A and B; and presence of only B. In addition, the character "/" in this application generally indicates an "or" relationship between contextually associated objects.

In the embodiments of this application, like reference signs denote like components, and for brevity, in different embodiments, detailed descriptions of like components are not repeated. It should be understood that, as shown in the accompanying drawings, sizes such as thickness, length, and width of various components and sizes such as thickness, length, and width of integrated devices in the embodiments of this application are merely for illustrative purposes and should not constitute any limitations on this application.

In this application, "a plurality of" means more than two (inclusive).

The battery mentioned in the embodiments of this application is a single physical module that includes one or more battery cells for providing a higher voltage and capacity. For example, the battery mentioned in this application may include a battery module, a battery pack, or the like. A battery typically includes a box configured to enclose one or more battery cells. The box can prevent liquids or other foreign matter from affecting charging or discharging of the battery cell.

The battery cell includes an electrode assembly and an electrolyte. The electrode assembly includes a positive electrode plate, a negative electrode plate, and a separator. Working of the battery cell mainly relies on migration of metal ions between the positive electrode plate and the negative electrode plate. The positive electrode plate includes a positive electrode current collector and a positive electrode active substance layer. The positive electrode active substance layer is applied on a surface of the positive electrode current collector. The positive electrode current collector includes a positive electrode coated region and a positive electrode tab connected to the positive electrode coated region. The positive electrode coated region is coated with the positive electrode active substance layer. The positive electrode tab is not coated with the positive electrode active substance layer. A lithium-ion battery cell is used as an example, for which, the positive electrode current collector may be made of aluminum, the positive electrode active substance layer includes a positive electrode active substance, and the positive electrode active substance may be lithium cobaltate, lithium iron phosphate, ternary lithium, lithium manganate, or the like. The negative electrode plate includes a negative electrode current collector and a negative electrode active substance layer. The negative electrode active substance layer is applied on a surface of the negative electrode current collector. The negative electrode current collector includes a negative electrode coated region and a negative electrode tab connected to the negative electrode coated region. The negative electrode coated region is coated with the negative electrode active substance layer. The negative electrode tab is not coated with the negative electrode active substance layer. The negative electrode current collector may be made of copper, the negative electrode active substance layer includes a negative electrode active substance, and the negative electrode active substance may be carbon, silicon, or the like. The separator may be made of PP (polypropylene, polypropylene), PE (polyethylene, polyethylene), or the like.

Batteries exhibit different electrical cycling performance at different ambient temperatures. Both excessively high and excessively low ambient temperature lead to decline in the cycling performance of batteries, and even shorten the service life of batteries. To ensure the safety, stable performance, and excellent operation of new energy vehicles, effective thermal management for batteries is necessary to keep batteries operating within an appropriate temperature range.

The inventors have a thermal management component provided inside a battery. The thermal management component can be configured to exchange heat with a battery cell in the battery, allowing for effective thermal management for the battery and ensuring that the battery cell operates within an appropriate temperature range.

The inventors have found that during charge and discharge, the battery cell in the battery is prone to swelling. After swelling and deformation, the battery cell has decreased heat conduction area with the thermal management component, reducing the heat exchange efficiency and affecting the cycle life of the battery cell.

In view of the above considerations, the inventors, after in-depth research, have designed a thermal management component. A support member is provided inside a housing of the thermal management component, and the support member is deformable under pressure. This allows for appropriately weakened supporting force of the support member on a first wall and a second wall, enabling the thermal management component to be correspondingly compressed and slightly deformed when the battery cell swells in shape, thereby reducing the extent of reduction in a heat exchange area between the thermal management and the battery cell, and improving the cycling performance of the battery cell.

The battery cell described in the embodiments of this application is applicable to batteries and electric apparatuses using a battery cell.

The electric apparatus may be a vehicle, a mobile phone, a portable device, a notebook computer, a ship, a spacecraft, an electric toy, an electric tool, or the like. The vehicle may be a fossil fuel vehicle, a natural gas vehicle, or a new energy vehicle. The new energy vehicle may be a battery electric vehicle, a hybrid electric vehicle, a range-extended electric vehicle, or the like. The spacecraft includes an airplane, a rocket, a space shuttle, a spaceship, and the like. The electric toy includes a fixed or mobile electric toy, for example, a game console, an electric toy car, an electric toy ship, an electric toy airplane, and the like. The electric tool includes an electric metal cutting tool, an electric grinding tool, an electric assembly tool, and an electric railway-specific tool, for example, an electric drill, an electric grinder, an electric wrench, an electric screwdriver, an electric hammer, an electric impact drill, a concrete vibrator, and an electric planer. The embodiments of this application impose no special limitation on the foregoing electric apparatus.

For ease of description, the electric apparatus being a vehicle is used as example for description of the following embodiments.

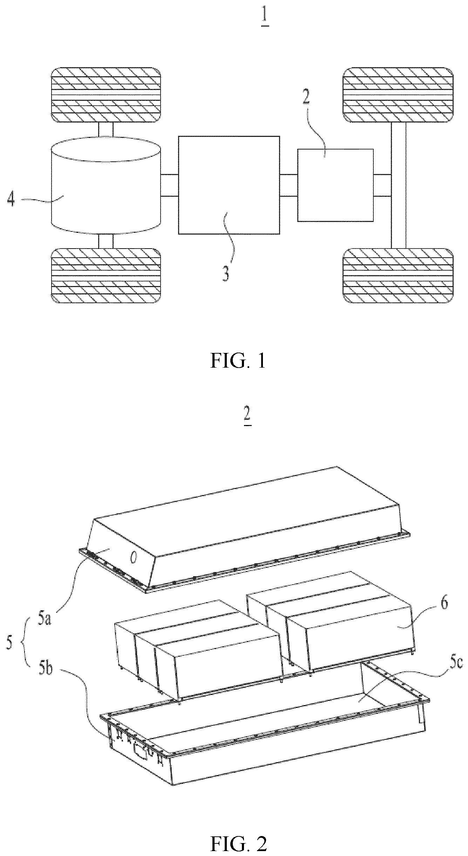

FIG. 1 is a schematic structural diagram of a vehicle according to some embodiments of this application.

As shown in FIG. 1, the vehicle 1 is provided with a battery 2 inside, where the battery 2 may be disposed at the bottom, front or rear of the vehicle 1. The battery 2 may be configured to supply power to the vehicle 1. For example, the battery 2 may be used as an operational power source for the vehicle 1.

The vehicle 1 may further include a controller 3 and a motor 4. The controller 3 is configured to control the battery 2 to supply power to the motor 4, for example, to satisfy power needs of start, navigation, and running of the vehicle 1.

In some embodiments of this application, the battery 2 can be used as not only the operational power source for the vehicle 1 but also a driving power source for the vehicle 1, replacing or partially replacing fossil fuel or natural gas to provide driving traction for the vehicle 1.

FIG. 2 is a schematic exploded view of a battery according to some embodiments of this application.

As shown in FIG. 2, the battery 2 includes a box 5 and a battery cell (not shown), where the battery cell is accommodated in the box 5.

The box 5 is configured to accommodate the battery cell, and the box 5 may have a variety of structures. In some embodiments, the box 5 may include a first box portion 5a and a second box portion 5b. The first box portion 5a and the second box portion 5b fit together to jointly define an accommodating space 5c for accommodating the battery cell. The second box portion 5b may be a hollow structure with an opening at one side, the first box portion 5a is a plate-shaped structure, and the first box portion 5a covers the opening side of the second box portion 5b so as to form the box 5 having the accommodating space 5c. Alternatively, both the first box portion 5a and the second box portion 5b may be hollow structures with an opening at one side, and the opening side of the first box portion 5a fits with the opening side of the second box portion 5b so as to form the box 5 having the accommodating space 5c. Certainly, the first box portion 5a and the second box portion 5b may be of various shapes, such as cylinder or cuboid.

In order to improve airtightness after connection of the first box portion 5a and the second box portion 5b, a sealing element, such as sealing gum and sealing ring, may further be disposed between the first box portion 5a and the second box portion 5b.

Assuming that the first box portion 5a fits on the top of the second box portion 5b, the first box portion 5a may also be referred to as an upper box cover and the second box portion 5b may also be referred to as a lower box body.

In the battery 2, one or a plurality of battery cells may be provided. If a plurality of battery cells are provided, the plurality of battery cells may be connected in series, parallel, or series-parallel, where being connected in series-parallel means a combination of series and parallel connections of the plurality of battery cells. The plurality of battery cells may be directly connected in series, parallel or series-parallel, and then an entirety of the plurality of battery cells is accommodated in the box 5; or certainly, the plurality of battery cells may be connected in series, parallel or series-parallel first to form a battery module 6 and then a plurality of battery modules 6 are connected in series, parallel or series-parallel to form an entirety which is accommodated in the box 5.

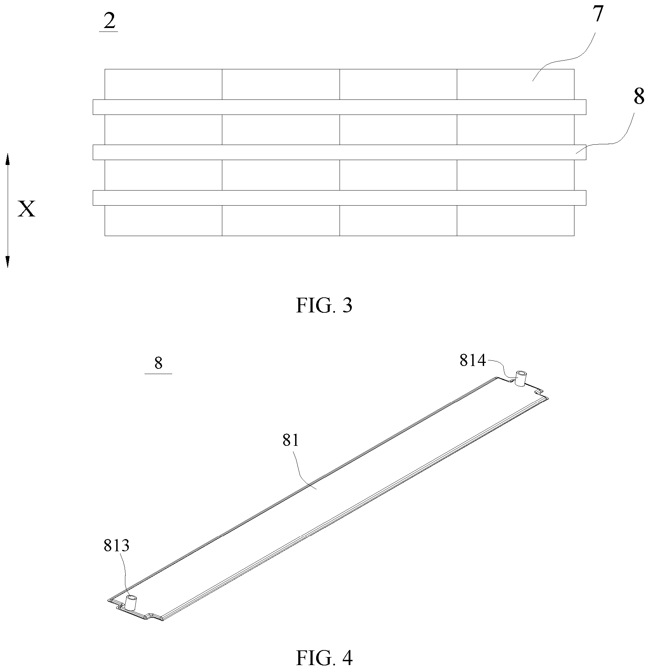

FIG. 3 is a schematic structural diagram of a battery according to some embodiments of this application.

In some embodiments, as shown in FIG. 3, the battery 2 includes a battery cell 7 and a thermal management component 8. The thermal management component 8 is configured to exchange heat with the battery cell 7 to ensure that the battery cell 7 operates within an appropriate temperature range.

In some embodiments, a plurality of battery cells 7 are provided, and the plurality of battery cells 7 may be electrically connected via a busbar, so that the plurality of battery cells 7 are connected in series, parallel, or series-parallel.

In some embodiments, at least part of the thermal management component 8 is located between adjacent battery cells 7, and the thermal management component 8 can exchange heat with battery cells 7 on both sides simultaneously.

In some embodiments, the battery 2 includes a plurality of rows of batteries, and the plurality of rows of batteries and a plurality of thermal management components 8 are alternately arranged along a first direction X. Each row of batteries includes a plurality of battery cells 7, and an arrangement direction of the plurality of battery cells 7 in the row of batteries may be perpendicular to the first direction X. In these embodiments, each thermal management component 8 can simultaneously exchange heat with the multiple battery cells 7 in the row of batteries.

The following describes the thermal management component in this application in detail with reference to the accompanying drawings.

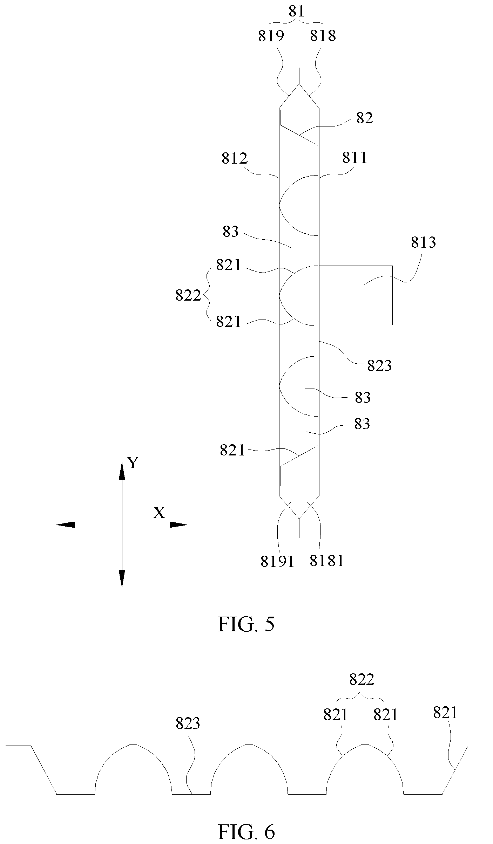

FIG. 4 is a schematic structural diagram of a thermal management component according to some embodiments of this application; FIG. 5 is a schematic cross-sectional view of the thermal management component shown in FIG. 4; and FIG. 6 is a schematic cross-sectional view of a support member in the thermal management component shown in FIG. 5.

As shown in FIGs. 4, 5, and 6, the thermal management component 8 in the embodiments of this application includes a housing 81 and a support member 82. The housing 81 is provided with an accommodating space inside, and the housing 81 includes a first wall 811 and a second wall 812 respectively located on two sides of the accommodating space. The support member 82 is disposed in the accommodating space and supports between the first wall 811 and the second wall 812, and the support member 82 is configured to be deformable when subjected to extrusion by the first wall 811.

The housing 81 may have an integral structure or may have separate structures. For example, the housing 81 is formed by connecting multiple parts provided separately.

The first wall 811 and the second wall 812 are thermally-conductive members configured to exchange heat with a battery cell 7.

The accommodating space is used for the circulation of a heat exchange medium (for example, water), so that when the first wall 811 comes into contact with the battery cell 7, the temperature of the battery cell 7 is adjusted through heat transfer.

Whether the support member 82 is connected to the housing 81 is not limited in the embodiments of this application. To be specific, the support member 82 may be merely accommodated in the housing 81 or may be fixedly connected to the housing 81.

In the embodiments of this application, that the support member 82 is deformable when subjected to extrusion by the first wall 811 means that the support member 82 can be compressed and deformed when subjected to extrusion by the first wall 811, and the support member 82 can restore at least part of the deformation when the force from the first wall 811 is removed. For example, the support member 82 may achieve the function of deformability through its own shape feature or through its own material feature.

The support member 82 supports between the first wall 811 and the second wall 812, and the support member 82 is deformable when subjected to extrusion by the first wall 811.

The support member 82 may be in direct contact with the first wall 811 to directly support the first wall 811. Alternatively, the support member 82 may also indirectly support the first wall 811 through another structure.

The support member 82 may be in direct contact with the second wall 812 to directly support the second wall 812. Alternatively, the support member 82 may also indirectly support the second wall 812 through another structure.

One or a plurality of support members 82 may be provided.

The support member 82 can support the first wall 811 and the second wall 812 to reduce the risk of collapse of the first wall 811 or second wall 812. The support member 82 is deformable when the first wall 811 is subjected to extrusion, so that when the battery cell 7 swells during the charge-discharge cycle, the first wall 811 deforms along with deformation of the support member 82 under the extrusion of the battery cell 7, squeezing out space for swelling of the battery cell 7, reducing an acting force between the battery cell 7 and the thermal management component 8, and reducing the extent of reduction in a heat exchange area between the battery cell 7 and the thermal management component 8, thereby improving the cycling performance of the battery cell 7.

In some embodiments, the first wall 811 and the second wall 812 are disposed opposite each other in a first direction X. The support member 82 includes an inclined portion 821, where at least part of the inclined portion 821 is inclined relative to the first direction X.

The first direction X is an arrangement direction of the first wall 811 and the second wall 812. For example, the first direction X is a direction perpendicular to the first wall 811. Optionally, the first wall 811 and the second wall 812 are parallel to each other, and the first direction X is perpendicular to the second wall 812.

The inclined portion 821 may be inclined relative to the first direction X as a whole, or may be only partially inclined relative to the first direction X.

When the thermal management component 8 is subjected to an extrusion force from the battery cell 7 in the first direction X, the inclined portion 821 can deform, and size of the deformed inclined portion 821 in the first direction X is compressed, thereby reducing the acting force between the battery cell 7 and the thermal management component 8, ensuring that the heat exchange area between the battery cell 7 and the thermal management component 8 satisfies the requirements, and improving the cycling performance of the battery cell 7.

A specific shape of the inclined portion 821 is not limited in the embodiments of this application, and may be a flat plate structure, a curved plate structure, or an irregular structure combining a flat plate structure and a curved plate structure as shown in FIG. 5.

Optionally, the inclined portion 821 is a flat plate structure, and an included angle between the inclined portion 821 and the first direction X is 15°-75°.

When the included angle between the inclined portion 821 and the first direction X is less than 15°, the supporting force of the inclined portion 821 on the first wall 811 and the second wall 812 is relatively large, making the thermal management component 8 less likely to be compressed. When the included angle between the inclined portion 821 and the first direction X is greater than 75°, the supporting force of the inclined portion 821 on the first wall 811 and the second wall 812 is relatively small, making the thermal management component 8 prone to damage when subjected to large concentrated stress, or causing the thermal management component 8 to come into contact with the second wall 812 due to a large amount of compressed deformation to block the accommodating space. The included angle between the inclined portion 821 and the first direction X being set within the range of 15°-75° can not only ensure that the thermal management component 8 is prone to compression to slightly deform, but also reduce the risk of damage to the thermal management component 8 when subjected to large concentrated stress, or avoid the situation where the thermal management component 8 comes into contact with the second wall 812 due to a large amount of compressed deformation to block the accommodating space.

Optionally, the inclined portion 821 is a flat plate structure, and the included angle between the inclined portion 821 and the first direction X is 15°, 25°, 30°, 45°, 60°, 65°, or 75°.

In some embodiments, the inclined portion 821 is a flat plate structure, and the included angle between the inclined portion 821 and the first direction X is 30°-60°.

In some embodiments, the inclined portion 821 is a curved plate structure. The included angle α between the inclined portion 821 and the first direction X refers to an included angle between a tangent at the midpoint of the curved plate structure in the first direction X and the first direction X. α is 15°-75°. Optionally, α is 15°, 25°, 30°, 45°, 60°, 65°, or 75°.

In some embodiments, α is 30°-60°. Optionally, α is 45°.

In some embodiments, the inclined portion 821 is provided in plurality, and the plurality of inclined portions 821 are disposed along a second direction Y, the second direction Y being perpendicular to the first direction X.

Optionally, the second direction Y is parallel to a width direction of the housing 81.

The shapes of the plurality of inclined portions 821 in the embodiments of this application may be the same or different, or only some of the inclined portions 821 have the same shape. When the inclined portion 821 is a flat plate structure, included angles between the plurality of inclined portions 821 and the first direction X may be the same or different, or included angles between only some of the inclined portions 821 and the first direction X are the same.

Provision of the plurality of inclined portions 821 can increase the supporting force on the first wall 811 and the second wall 812, reducing the risk of damage to the thermal management component 8 when subjected to large concentrated stress.

In some embodiments, the plurality of inclined portions 821 are integrally formed.

In some embodiments, two adjacent inclined portions 821 are inclined in opposite directions.

In the first direction X, each inclined portion 821 has a first end close to the first wall 811 and a second end close to the second wall 812. That two adjacent inclined portions 821 are inclined in opposite directions means that with their respective first ends as base points, the two inclined portions 821 are inclined either toward each other or away from each other.

In these embodiments, that two adjacent inclined portions 821 are inclined in opposite directions means that at least two adjacent inclined portions 821 are inclined in opposite directions. Optionally, any two adjacent inclined portions 821 are inclined in opposite directions.

The inventors have found that when the plurality of inclined portions 821 are all inclined in the same direction, although the thermal management component 8 is prone to deformation when subjected to the extrusion force in the first direction X, the resilience after deformation is relatively weak, causing a gap between the thermal management component 8 and the battery cell 7 to be easily created, thereby reducing the heat exchange area between the thermal management component 8 and the battery cell 7. In view of this, the inventors have made two adjacent inclined portions 821 be inclined in opposite directions. In this way, the resilience of the support member 82 after deformation is significantly increased, the contact area between the housing 81 and the battery cell 7 is increased, and the thermal management capability of the thermal management component 8 for the battery cell 7 is improved.

In some embodiments, flow channels 83 are formed between adjacent inclined portions 821 in the second direction Y.

The plurality of inclined portions 821 can divide the accommodating space into a plurality of flow channels 83. In this way, when a heat exchange medium enters the accommodating space, the heat exchange medium can be divided into the plurality of flow channels 83, so that the thermal management component 8, when coming into contact with the battery cell 7, can regulate the temperatures of various parts of the battery cell 7 in a uniform manner.

In some embodiments, the support member 82 includes a plurality of arched structures 822 arranged along the second direction Y, and each arched structure 822 includes two adjacent inclined portions 821.

The curvatures of the plurality of arched structures 822 are not limited in the embodiments of this application. The curvatures of the plurality of arched structures 822 may be the same or different, or the curvatures of only some of the plurality of arched structures 822 are the same. The arched structure 822 in the embodiments of this application refers to an integral curved structure.

A direction toward which the opening of the arched structure 822 faces is not limited in the embodiments of this application. The arched structure 822 may face the first wall 811 or face the second wall 812.

The arched structure 822 has good elasticity, enhancing the resilience of the support member 82 after deformation, which in turn increases the contact area between the housing 81 and the battery cell 7, and improves the thermal management capability of the thermal management component 8 for the battery cell 7.

Two inclined portions 821 of the arched structure 822 are both curved plate structures. Compared with the flat plate structure, the curved plate structure is more prone to deformation and has stronger resilience after deformation. Therefore, the arched structure 822 can not only reduce the acting force between the battery cell 7 and the thermal management component 8 during swelling of the battery cell 7, improving the cycling performance of the battery cell 7, but also increase the contact area between the housing 81 and the battery cell 7 due to the strong resilience, improving the thermal management capability of the thermal management component 8 for the battery cell 7.

In some embodiments, an end of the arched structure 822 close to the second wall 812 in the first direction X abuts against the second wall 812 and is connected to the second wall 812.

The arched structure 822 may be connected to the second wall 812 by adhering, snap-fitting, welding, or other means.

The arched structure 822 being connected to the second wall 812 can enhance the connection strength between the arched structure 822 and the housing 81, reduce the risk of the support member 82 shaking in the accommodating space, and improve the stability of the support member 82.

The plurality of arched structures 822 can divide the accommodating space into a plurality of flow channels 83. In this way, when a heat exchange medium enters the accommodating space, the heat exchange medium can be divided into the plurality of flow channels 83, so that the thermal management component 8, when coming into contact with the battery cell 7, can regulate the temperatures of various parts of the battery cell 7 in a uniform manner.

Optionally, the opening of the arched structure 822 faces the first wall 811.

In some embodiments, the support member 82 further includes connecting portions 823, and each connecting portion 823 connects two adjacent inclined portions 821 and abuts against the first wall 811.

A shape of the connecting portion 823 is not limited in the embodiments of this application, and may be a flat plate structure, a curved plate structure, or an irregular structure formed by combining a flat plate structure and a curved plate structure.

Optionally, the connecting portion 823 and two adjacent inclined portions 821 are integrally formed.

The connecting portion 823 is provided, and two inclined portions 821 are connected together via the connecting portion 823, which can enhance the structural strength of the support member 82, and the plurality of inclined portions 821 form a whole, enhancing the resilience after deformation in the first direction X and improving the thermal management capability of the thermal management component 8 for the battery cell 7. The connecting portion 823 can increase the distance between two inclined portions 821 to increase a current flow area of the flow channel formed by the connecting portion 823 and the two inclined portions 821.

In some embodiments, the support member 82 includes a plurality of arched structures 822 arranged along the second direction Y, where each arched structure 822 includes two adjacent inclined portions 821, and adjacent arched structures 822 are connected via the connecting portion 823.

The arched structure 822 in the embodiments of this application includes a curved top end and two free ends opposite the top end. The connecting portion 823 in the embodiments of this application is connected to adjacent free ends of two arched structures 822.

A shape of the connecting portion 823 is not limited in the embodiments of this application, and may be a flat plate structure, a curved plate structure, or an irregular structure formed by combining a flat plate structure and a curved plate structure.

Optionally, the arched structure 822 and the connecting portion 823 are integrally formed.

Adjacent arched structures 822 are connected via the connecting portion 823, which can enhance the structural strength of the support member 82, and the plurality of arched structures 822 form a whole, enhancing the resilience after deformation in the first direction X and improving the thermal management capability of the thermal management component 8 for the battery cell 7. The connecting portion 823 can increase the distance between two arched structures 822 to increase a current flow area of the flow channel formed by the connecting portion 823 and the two arched structures 822.

In some embodiments, the connecting portion 823 is welded to the first wall 811, and the arched structure 822 is welded to the second wall 812.

In the embodiments of this application, an opening of the arched structure 822 faces the first wall 811, and the curved top end of the arched structure 822 is welded to the second wall 812.

The connecting portion 823 and the first wall 811, as well as the arched structure 822 and the second wall 812, are connected by welding, which can enhance the fastness of the connection between the support member 82 and the housing 81, increase the supporting force of the support member 82 on the first wall 811 and the second wall 812, and reduce the risk of damage to the thermal management component 8 when subjected to large concentrated stress. In addition, the support member 82 is connected to both the first wall 811 and the second wall 812, with the first wall 811 covering the opening of the arched structure 822, so that the arched structure 822 and the first wall 811 enclose a flow channel 83. The second wall 812 covers the connecting portion 823 and a side of two adjacent inclined portions 821 facing away from the opening of the arched structure, so that the connecting portion 823, the back sides of the two adjacent arched structures 822, and the second wall 812 also enclose a flow channel 83. Therefore, the support member 82 and the first wall 811, as well as the support member 82 and the second wall 812, enclose a plurality of independent flow channels 83. When a heat exchange medium enters the accommodating space, the heat exchange medium can be divided into the plurality of flow channels 83, so that the thermal management component 8, when coming into contact with the battery cell 7, can regulate the temperatures of various parts of the battery cell 7 in a uniform manner.

In some embodiments, the housing 81 is provided with a liquid inlet 813 and a liquid outlet 814 that communicate with the accommodating space. A heat exchange medium enters through the liquid inlet 813, flows through the accommodating space, and exits through the liquid outlet 814.

In some embodiments, the housing 81 includes a first housing body 818 and a second housing body 819, and the first housing body 818 and the second housing body 819 are connected to enclose the accommodating space. The first housing body 818 includes the first wall 811, and the second housing body 819 includes the second wall 812.

The first housing body 818 and the second housing body 819 in the embodiments of this application are made of a thermally conductive material. Optionally, the first housing body 818 is made of ferrocarbon alloy.

In some embodiments, the first housing body 818 is provided with a first recess 8181 on a side facing the second housing body 819, and the second housing body 819 is provided with a second recess 8191 on a side facing the first housing body 818, the accommodating space including the first recess 8181 and the second recess 8191; and a bottom wall of the first recess 8181 is the first wall 811, and a bottom wall of the second recess 8191 is the second wall 812.

Shapes and recess depths of the first recess 8181 and the second recess 8191 are not limited in the embodiments of this application. Cross-sections of the first recess 8181 and the second recess 8191 in their respective length directions may be trapezoidal, rectangular, or of other shapes.

The first housing body 818 and the second housing body 819 are both recessed outward, which allows for larger volume of the accommodating space to accommodate more heat exchange medium, enhancing the cooling effect on the battery cell 7. In some embodiments, the liquid inlet 813 and the liquid outlet 814 may be both provided in the first housing body 818, or both provided in the second housing body 819, or respectively provided in the first housing body 818 and the second housing body 819.

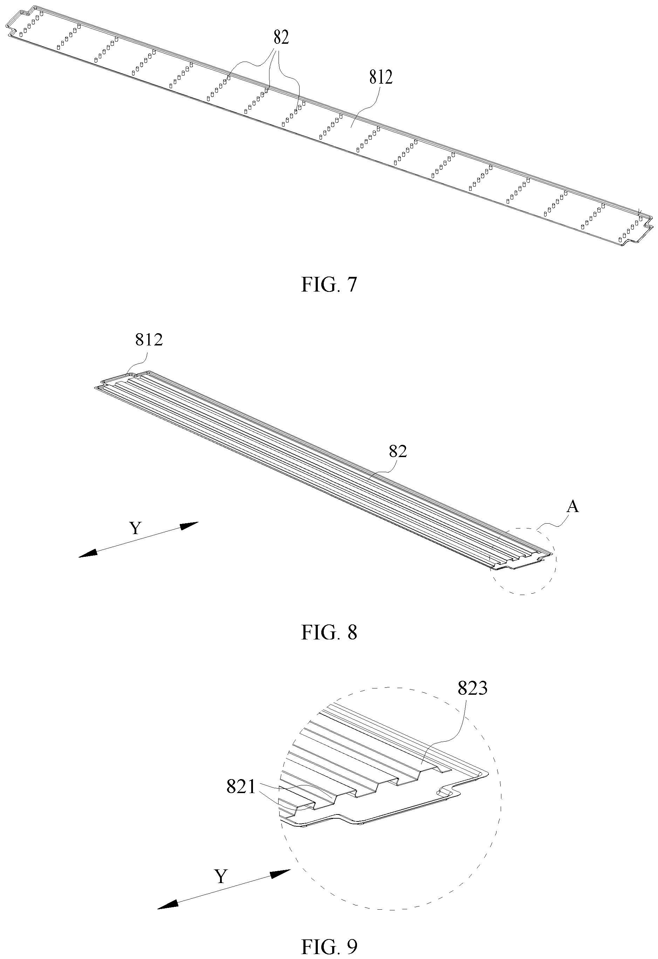

FIG. 7 is a schematic partial structural diagram of a thermal management component according to some other embodiments of this application.

As shown in FIG. 7, in some embodiments, the support member 82 is made of an elastic material.

The elastic material in the embodiments of this application needs to have certain capability of deforming and be able to restore at least part of the deformation when an external force is removed. For example, the support member 82 may be made of rubber or silicone.

A shape of the support member 82 is not limited in the embodiments of this application, and may be cylindrical, cuboid, or spherical.

In some embodiments, the support member 82 is provided in plurality.

The support member 82 is made of an elastic material, where the elastic material is prone to deformation and has good resilience after deformation. Therefore, when the thermal management component 8 is subjected to an extrusion force in the first direction X, the support member 82 is more likely to deform, which not only significantly reduces the acting force between the battery cell 7 and the thermal management component 8, improving the cycling performance of the battery cell 7, but also increases the contact area between the thermal management component 8 and the battery cell 7 due to good resilience, improving the thermal management capability of the thermal management component 8 for the battery cell 7.

In some embodiments, the support member 82 is a porous structure.

The porous structure in the embodiments of this application may be sponge or another structure with many pores.

The support member 82 is a porous structure, and the porous structure is prone to deformation due to the existence of many pores. Therefore, when the thermal management component 8 is subjected to an extrusion force in the first direction X, the support member 82 is more likely to deform, which can significantly reduce the acting force between the battery cell 7 and the thermal management component 8, improving the cycling performance of the battery cell 7.

FIG. 8 is a schematic partial structural diagram of a thermal management component according to still some other embodiments of this application; and FIG. 9 is an enlarged view of position A in FIG. 8.

As shown in FIGs. 8 and 9, in some embodiments, the support member 82 includes a plurality of inclined portions 821 arranged along the second direction Y, and adjacent two inclined portions 821 are connected via the connecting portion 823. Two adjacent connecting portions 823 are in one-to-one correspondence and connected to two opposite ends of the inclined portion 821 in an inclination direction of the inclined portion 821.

In some embodiments, the connecting portion 823 connected to an end of the inclined portion 821 close to the first wall 811 abuts against and is connected to the first wall 811, and the connecting portion 823 connected to an end of the inclined portion 821 close to the second wall 812 abuts against and is connected to the second wall 812.

Optionally, the connecting portion 821 is a flat plate structure.

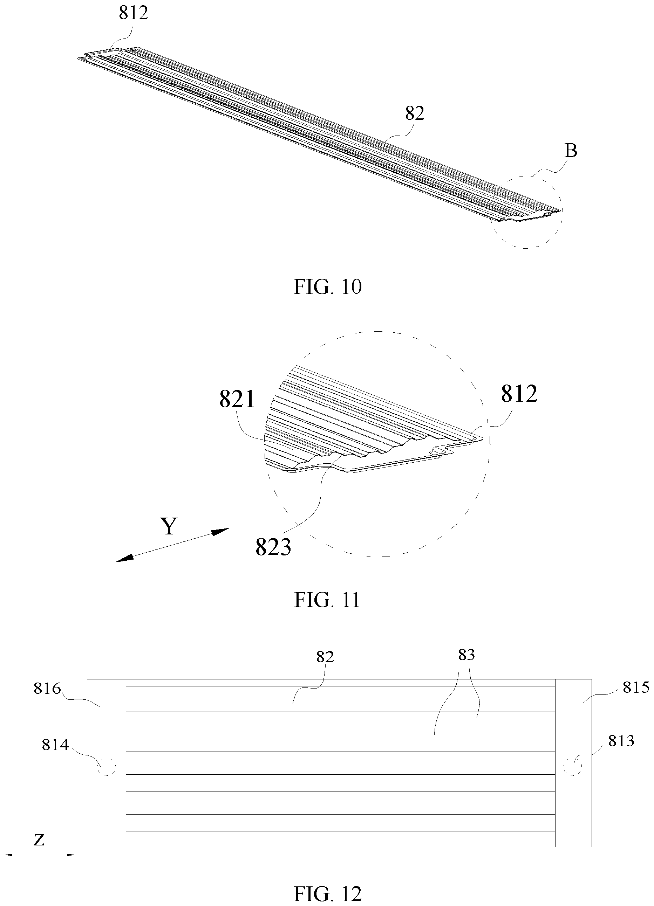

FIG. 10 is a schematic partial structural diagram of a thermal management component according to yet some other embodiments of this application; and FIG. 11 is an enlarged view of position B in FIG. 10.

As shown in FIGs. 10 and 11, in some embodiments, the support member 82 includes a plurality of inclined portions 821 arranged along the second direction Y, and adjacent two inclined portions 821 are connected via the connecting portion 823. Two adjacent connecting portions 823 are in one-to-one correspondence and connected to two opposite ends of the inclined portion 821 in an inclination direction of the inclined portion 821.

Optionally, the connecting portion 821 is a flat plate structure.

Projections of two adjacent inclined portions 821 in the second direction Y on the housing 81 may overlap or not overlap.

FIG. 12 is a schematic diagram of internal flow paths of a thermal management component according to some embodiments of this application.

As shown in FIG. 12, in some embodiments, the accommodating space includes a first confluence region 815 and a second confluence region 816. The liquid inlet 813 communicates with the first confluence region 815, and the liquid outlet 814 communicates with the second confluence region 816. The support member 82, the first wall 811, and the second wall 812 enclose and form a plurality of flow channels 83, where the plurality of flow channels 83 are configured to implement communication between the first confluence region 815 and the second confluence region 816.

An area size relationship between the first confluence region 815 and the second confluence region 816 is not limited in the embodiments of this application. The area of the first confluence region 815 may be larger than, smaller than, or equal to the area of the second confluence region 816.

The plurality of flow channels 83 implement communication between the first confluence region 815 and the second confluence region 816. A heat exchange medium enters the first confluence region 815 through the liquid inlet 813, flows through the plurality of flow channels 83 into the second confluence region 816, and then flows out through the liquid outlet 814. Provision of the first confluence region 815 and the second confluence region 816 allows the plurality of flow channels 83 to implement communication between the liquid inlet 813 and the liquid outlet 814 by just implementing communication between the first confluence region 815 and the second confluence region 816. Therefore, provision of one liquid inlet 813 and one liquid outlet 814 can implement communication between the plurality of independent flow channels 83, allowing the plurality of flow channels 83 in the support member 82 to all have the heat exchange medium flowing through.

In some embodiments, the first confluence region 815 and the second confluence region 816 are located on two sides of the support member 82 in a third direction Z.

In the embodiments of this application, the third direction Z intersects with the first direction X. Optionally, the first direction X is perpendicular to the third direction Z. Further, the first direction X, the second direction Y, and the third direction Z are perpendicular to each other.

The third direction Z in the embodiments of this application may be a length direction of the thermal management component 8.

The first confluence region 815 and the second confluence region 816 are disposed on two sides of the support member 82 in the third direction Z, so that the heat exchange medium flows from the first confluence region 815 through the plurality of flow channels 83 along the third direction Z to the second confluence region 816. The heat exchange medium flows through the entire support member 82 substantially along the third direction Z to exchange heat with the battery cell 7. The flow path of the heat exchange medium is relatively straight, resulting in better heat exchange effect.

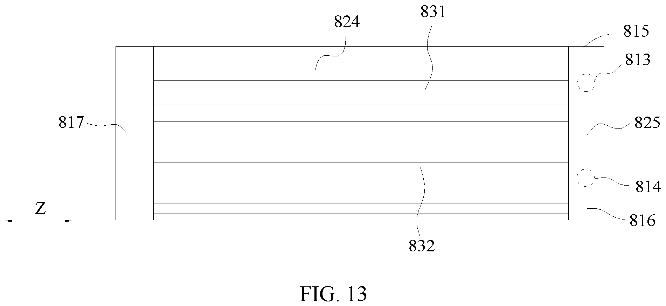

FIG. 13 is a schematic diagram of internal flow paths of a thermal management component according to some other embodiments of this application.

As shown in FIG. 13, in some embodiments, the support member 82 includes a body portion 824 and a partition portion 825 protruding from an end of the body portion 824 along the third direction Z. The accommodating space further includes a third confluence region 817, the third confluence region 817 being located on a side of the body portion 824 facing away from the partition portion 825, the first confluence region 815 and the second confluence region 816 are located on a same side of the body portion 824 facing the partition portion 825, and the partition portion 825 is configured to separate the first confluence region 815 from the second confluence region 816. The plurality of flow channels 83 include a first flow channel 831 and a second flow channel 832, where the first flow channel 831 is configured to implement communication between the first confluence region 815 and the third confluence region 817, and the second flow channel 832 is configured to implement communication between the second confluence region 816 and the third confluence region 817.

A shape of the partition portion 825 is not limited in the embodiments of this application, and may be plate-shaped, block-shaped, or irregular-shaped.

Area size relationships between the first confluence region 815, the second confluence region 816, and the third confluence region 817 are not limited in the embodiments of this application. Optionally, the area of the third confluence region 817 is larger than the area of either the first confluence region 815 or the second confluence region 816.

Optionally, the plurality of flow channels 83 are independent of each other. To be specific, the heat exchange medium in each flow channel 83 does not flow into another flow channel 83.

The heat exchange medium enters the first flow channel 831 from the first confluence region 815, then flows along the third direction Z to the third confluence region 817, enters the second flow channel 832 from the third confluence region 817, then flows along the third direction Z to the second confluence region 816, and flows out through the liquid outlet 814.

In the embodiments of this application, the liquid inlet 813 and the liquid outlet 814 are located on the same side of the body portion 824 facing the partition portion 825. The liquid inlet 813 and the liquid outlet 814 are close to each other, facilitating layout of pipes.

An embodiment of this application further provides a battery including a battery cell 7 and the foregoing thermal management component 8, where the thermal management component 8 is configured to exchange heat with the battery cell 7.

In some embodiments, the battery cell 7 is provided in plurality, and at least part of the thermal management component 8 is located between adjacent battery cells 7. The thermal management component 8 can exchange heat with battery cells 7 on both sides simultaneously, improving the heat exchange efficiency.

An embodiment of this application further provides an electric apparatus including the foregoing battery 2, where the battery 2 is configured to supply electrical energy.

According to some embodiments of this application, referring to FIGs. 4 to 6, this application provides a thermal management component 8 including a housing 81 and a support member 82. The housing 81 includes a first housing body 818 and a second housing body 819, and the first housing body 818 and the second housing body 819 are connected to enclose an accommodating space. The first housing body 818 includes a first wall 811, and the second housing body 819 includes a second wall 812. The first wall 811 and the second wall 812 are located on two sides of the accommodating space. The first wall 811 and the second wall 812 are disposed opposite each other in a first direction X. The support member 82 is disposed in the accommodating space and supports between the first wall 811 and the second wall 812, and the support member 82 is configured to be deformable when subjected to extrusion by the first wall 811.

The support member 82 includes a plurality of arched structures 822 arranged along a second direction Y, and adjacent arched structures 822 are connected via a connecting portion 823. Each arched structure 822 includes two adjacent inclined portions 821, at least part of the inclined portion 821 is inclined relative to the first direction X, and flow channels 83 are formed between adjacent inclined portions 821. The connecting portion 823 connects two adjacent arched structures 822 and abuts against the first wall 811. An end of the arched structure 822 close to the second wall 812 in the first direction X abuts against the second wall 812 and is connected to the second wall 812.

The housing 81 is provided with a liquid inlet 813 and a liquid outlet 814 that communicate with the accommodating space. The accommodating space includes a first confluence region 815 and a second confluence region 816, where the liquid inlet 813 communicates with the first confluence region 815, and the liquid outlet 814 communicates with the second confluence region 816. The support member 82, the first wall 811, and the second wall 812 enclose and form a plurality of flow channels 83, where the plurality of flow channels 83 are configured to implement communication between the first confluence region 815 and the second confluence region 816.

Although this application has been described with reference to some preferred embodiments, various modifications to this application and replacements of the components therein with equivalents can be made without departing from the scope of this application. In particular, as long as there is no structural conflict, the various technical features mentioned in the embodiments can be combined in any manner. This application is not limited to the specific embodiments disclosed in this specification but includes all technical solutions falling within the scope of the claims.

## Claims

1. A thermal management component, comprising:
a housing with an accommodating space provided inside, wherein the housing comprises a first wall and a second wall respectively located on two sides of the accommodating space; and
a support member disposed in the accommodating space and supporting between the first wall and the second wall, wherein the support member is configured to be deformable when subjected to extrusion by the first wall.

2. The thermal management component according to claim 1, wherein
the first wall and the second wall are disposed opposite each other in a first direction; and
the support member comprises an inclined portion, wherein at least part of the inclined portion is inclined relative to the first direction.

3. The thermal management component according to claim 2, wherein the inclined portion is provided in plurality, and the plurality of inclined portions are disposed along a second direction, the second direction being perpendicular to the first direction.

4. The thermal management component according to claim 3, wherein two adjacent inclined portions are inclined in opposite directions.

5. The thermal management component according to claim 3, wherein flow channels are formed between adjacent inclined portions in the second direction.

6. The thermal management component according to claim 3, wherein the support member comprises a plurality of arched structures arranged along the second direction, and each arched structure comprises two adjacent inclined portions.

7. The thermal management component according to claim 6, wherein an end of the arched structure close to the second wall in the first direction abuts against the second wall and is connected to the second wall.

8. The thermal management component according to claim 3, wherein the support member further comprises connecting portions, and each connecting portion connects two adjacent inclined portions and abuts against the first wall.

9. The thermal management component according to claim 8, wherein
the support member comprises a plurality of arched structures arranged along the second direction, and each arched structure comprises two adjacent inclined portions; and
adjacent arched structures are connected via the connecting portion.

10. The thermal management component according to claim 9, wherein the connecting portion is welded to the first wall, and the arched structure is welded to the second wall.

11. The thermal management component according to any one of claims 1 to 10, wherein the support member is made of an elastic material.

12. The thermal management component according to any one of claims 1 to 11, wherein the support member is a porous structure.

13. The thermal management component according to any one of claims 1 to 12, wherein the housing is provided with a liquid inlet and a liquid outlet that communicate with the accommodating space.

14. The thermal management component according to claim 13, wherein
the accommodating space comprises a first confluence region and a second confluence region, wherein the liquid inlet communicates with the first confluence region, and the liquid outlet communicates with the second confluence region; and
the support member, the first wall, and the second wall enclose and form a plurality of flow channels, wherein the plurality of flow channels are configured to implement communication between the first confluence region and the second confluence region.

15. The thermal management component according to claim 14, wherein the first confluence region and the second confluence region are located on two sides of the support member in a third direction.

16. The thermal management component according to claim 14, wherein
the support member comprises a body portion and a partition portion protruding from an end of the body portion along a third direction;
the accommodating space further comprises a third confluence region, the third confluence region being located on a side of the body portion facing away from the partition portion, the first confluence region and the second confluence region are located on a same side of the body portion facing the partition portion, and the partition portion is configured to separate the first confluence region from the second confluence region; and
the plurality of flow channels comprise a first flow channel and a second flow channel, wherein the first flow channel is configured to implement communication between the first confluence region and the third confluence region, and the second flow channel is configured to implement communication between the second confluence region and the third confluence region.

17. The thermal management component according to any one of claims 1 to 16, wherein the housing comprises a first housing body and a second housing body, and the first housing body and the second housing body are connected to enclose the accommodating space; and
the first housing body comprises the first wall, and the second housing body comprises the second wall.

18. The thermal management component according to claim 17, wherein the first housing body is provided with a first recess on a side facing the second housing body, and the second housing body is provided with a second recess on a side facing the first housing body, the accommodating space comprising the first recess and the second recess; and
a bottom wall of the first recess is the first wall, and a bottom wall of the second recess is the second wall.

19. A battery, comprising:
a battery cell; and
the thermal management component according to any one of claims 1 to 18, wherein the thermal management component is configured to exchange heat with the battery cell.

20. The battery according to claim 19, wherein the battery cell is provided in plurality, and at least part of the thermal management component is located between adjacent battery cells.

21. An electric apparatus, comprising the battery according to claim 19 or 20, wherein the battery is configured to supply electrical energy.
